# EUROPÄISCHE PATENTSCHRIFT

(11) **EP 3 199 341 B1**
(45) Veröffentlichungstag und Bekanntmachung des Hinweises auf die Patenterteilung: **22.05.2019**
(21) Anmeldenummer: 16198930.6
(22) Anmeldetag: 15.11.2016
(51) Int. Cl.: B32B 27/12, B32B 27/40, B32B 37/12, B32B 37/20, B32B 37/06

(54) **VERFAHREN ZUM KONTINUIERLICHEN HERSTELLEN EINES MEHRLAGIGEN MATERIALAUFBAUS**
METHOD FOR CONTINUOUSLY PRODUCING A MULTILAYER MATERIAL STRUCTURE
PROCÉDÉ DE FABRICATION CONTINUE D'UN MATÉRIAU STRATIFIÉ

(30) Priorität: 01.02.2016 DE 102016201432
(43) Veröffentlichungstag der Anmeldung: 02.08.2017
(73) Patentinhaber: Hofer Textilveredelungs GmbH, 95032 Hof/Saale (DE)
(72) Erfinder: Ocker, Michael, 95367 Trebgast (DE); Hertrich, Johannes, 95213 Münchberg (DE)
(74) Vertreter: Rau, Schneck & Hübner Patentanwälte Rechtsanwälte PartGmbB

(56) Entgegenhaltungen:
- DE-A1-102006 006 333
- FR-A1- 2 125 575
- US-A- 4 069 081
- US-A1- 2009 277 567
- US-A1- 2012 229 992

## Beschreibung

Die Erfindung betrifft ein Verfahren zum kontinuierlichen Herstellen eines mehrlagigen Materialaufbaus.

Aus der US 4,069,081, der US 2009/0277567 A1 und der FR 2 125 575 A1 ist jeweils ein Verfahren zum Laminieren von Dokumenten bekannt, wobei US 4,069,081 ein kontinuierliches Verfahren offenbart, bei dem ein Trägermaterial und ein Verbundmaterial zugeführt werden, die dann mit Kleber mittels einer Wärmequelle erwärmt und miteinander verbunden werden.

Bei der Herstellung eines mehrlagigen Materialaufbaus bestehend aus einem steifen, plattenförmigen Trägermaterial und einem weniger steifen Dekormaterial werden die Materialien einzeln zugeschnitten und mittels eines Klebematerials, insbesondere eines Sprühklebers, manuell miteinander verklebt. Die Herstellung des mehrlagigen Materialaufbaus ist aufwändig und kosteneffektiv. Die Herstellung ist nur diskontinuierlich möglich. Die Herstellung ist unwirtschaftlich. Derartige Herstellverfahren sind bekannt aus DE 10 2006 006 333 A1 und aus US 2012/229992 A1.

Der Erfindung liegt die Aufgabe zugrunde, das Herstellen eines mehrlagigen Materialaufbaus zu vereinfachen, so dass insbesondere ein kontinuierliches Herstellen des mehrlagigen Materialaufbaus unter wirtschaftlichen Gesichtspunkten möglich ist.

Die Aufgabe wird durch die Merkmale des Anspruchs 1 gelöst. Der Kern der Erfindung besteht darin, dass erkannt worden ist, dass ein Trägermaterial, das eine höhere Biegesteifigkeit aufweist als ein Verbundmaterial, nach Erwärmen des Verbundmaterials mit diesem in einer Verbindungseinheit kontinuierlich verbunden werden kann. Die kontinuierliche Herstellung erfolgt insbesondere mittels einer Inline-Rollen-Flammkaschierung. Das Verbundmaterial weist zumindest bereichsweise ein Klebematerial auf, das mittels einer Wärmequelle erwärmt wird. Die Wärmequelle ist als Brenner mit einer offenen Flamme ausgeführt. Das erwärmte Klebematerial ermöglicht das unmittelbare Verkleben des Verbundmaterials auf dem Trägermaterial. Das Trägermaterial ist faserverstärkter, insbesondere glasfaserverstärkter, Kunststoff. Das Trägermaterial weist in eine Kunststoffmatrix eingebettete Glasfasern auf, die beispielsweise als Faserabschnitte, Gewebe oder Vlies in der Kunststoffmatrix angeordnet sein können. Als Kunststoffmatrix dient insbesondere Polyester. Es sind auch andere Kunststoffmaterialien für die Matrix möglich. Es können auch andere Fasermaterialien verwendet werden, beispielsweise Kohlefasern und/oder Aramidfasern. Das Verbundmaterial ist insbesondere ein Verbund aus dem Klebematerial und einer textilen Dekor-Oberware. Das Klebematerial ist insbesondere schaumförmig. Das Verbundmaterial ist insbesondere eine schaumverstärkte Sicht-Textillage. Das Verbundmaterial ist weich. Die Verbindungseinheit ermöglicht unmittelbares und kontinuierliches Verbinden des Trägermaterials mit dem Verbundmaterial unter Aufbringen von Druck derart, dass die Materialien aneinandergepresst werden. Eine Vorrichtung ermöglicht es, dass das Trägermaterial und der mehrlagige Materialaufbau im Wesentlichen geradlinig die Vorrichtung durchlaufen können. Eine mechanische Beanspruchung des Trägermaterials beispielsweise durch Umlenkung des Materialstroms an Umlenkrollen und/oder Umlenkwalzen ist vermieden. Eine Beschädigung des vergleichsweise steifen Trägermaterials und/oder ein Ablösen des Verbundmaterials von dem Trägermaterials in Folge der mechanischen Beanspruchung ist ausgeschlossen. Die Vorrichtung ermöglicht es, das Trägermaterial quasi kontinuierlich als bahnförmiges Material zuzuführen und mit dem, insbesondere ebenfalls bahnförmigen, quasi kontinuierlich zugeführten Verbundmaterial kontinuierlich zu fügen. Insbesondere liegt der mehrlagige Materialaufbau als kontinuierlich abführbares, bahnförmiges Material vor. Aus dem bahnförmigen Material kann ein erforderlicher Zuschnitt hergestellt werden. Das Herstellen des mehrlagigen Materialaufbaus ist wirtschaftlich.

Die Verbindungseinheit, durch die das Trägermaterial und das Verbundmaterial entlang einer geradlinigen Förderrichtung gefördert werden, gewährleistet eine geradlinige Förderung des Trägermaterials während des Fügens mit dem Verbundmaterial. Dadurch ist das kontinuierliche Verbinden der Materialien zu dem mehrlagigen Materialaufbau vereinfacht. Eine zusätzliche mechanische Beanspruchung während des kontinuierlichen Verbindens in der Verbindungseinheit ist ausgeschlossen.

Das Verfahren, bei dem faserverstärktes Kunststoffmaterial als Trägermaterial mittels einer ersten Zuführeinheit und Verbundmaterial mittels einer zweiten Zuführeinheit zugeführt werden, wobei das Verbundmaterial zumindest bereichsweise ein schaumförmiges Klebematerial aufweist, das Klebematerial mittels einer Wärmequelle in Form einer offenen Brennerflamme erwärmt wird und ein kontinuierliches Verbinden des erwärmten Verbundmaterials mit dem Trägermaterial zu dem mehrlagigen Materialaufbau mittels einer Verbindungseinheit erfolgt, ermöglicht die kontinuierliche Herstellung eines Materialverbunds aus dem steifen Trägermaterial, insbesondere in Form des faserverstärkten Kunststoffmaterials, und dem weichen, schaumverstärkten, textilen Obermaterial mittels eines kontinuierlichen Flammkaschierverfahrens. Die Biegesteifigkeit des Trägermaterials beträgt mindestens 50 N/mm²
Ein Zuführen des Trägermaterials entlang einer ersten Zuführrichtung von der ersten Zuführeinheit in die Verbindungseinheit derart, dass die erste Zuführrichtung im Wesentlichen parallel zu der Förderrichtung orientiert ist, und Abführen des mehrlagigen Materialaufbaus entlang einer Abführrichtung aus der Verbindungseinheit, wobei die Abführrichtung im Wesentlichen parallel, insbesondere parallel, zur Förderrichtung orientiert ist, gewährleistet eine im Wesentlichen geradlinige Führung des Trägermaterials und des mehrlagigen Materialaufbaus entlang der Vorrichtung. Eine im Wesentlichen parallele Zuführrichtung und/oder eine im Wesentlichen parallele Abführrichtung ist dann gegeben, wenn ein Neigungswinkel der Zuführrichtung bzw. der Abführrichtung gegenüber der Förderrichtung betragsmäßig kleiner ist als 30°, insbesondere betragsmäßig kleiner als 20°, insbesondere betragsmäßig kleiner als 10°, insbesondere betragsmäßig kleiner als 5° und insbesondere betragsmäßig kleiner als 2°.

Eine Trägermaterial-Speichereinheit zum Speichern des Trägermaterials, ermöglicht eine unkomplizierte und platzsparende Bereitstellung des Trägermaterials. Von einer Trägermaterial-Speicherrolle kann Trägermaterial bahnförmig unmittelbar und kontinuierlich bereitgestellt werden. Insbesondere wurde erkannt, dass das vergleichsweise steife Trägermaterial auf der Trägermaterial-Speicherrolle vorteilhaft anordenbar ist. Durch die Höhenverstellbarkeit der Trägermaterial-Speicherrolle, insbesondere gegenüber der Verbindungseinheit, kann ein Neigungswinkel der ersten Zuführrichtung gegenüber der Förderrichtung veränderlich eingestellt werden. Eine Höhenverstellung ist beispielsweise über höhenverstellbare Füße an einem Gestell für die Trägermaterial-Speicherrolle möglich.

Eine Materialaufbau-Speichereinheit zum Speichern des mehrlagigen Materialaufbaus weist im Wesentlichen die Vorteile der Trägermaterial-Speichereinheit auf, worauf hiermit verwiesen wird.

Ein Gasbrenner als Wärmequelle ist unkompliziert ausgeführt. Insbesondere kann der Gasbrenner eine offene Gasflamme bereitstellen, die zum Erwärmen des Klebematerials erforderlich ist. Die Wärmequelle ist zum Erwärmen des Klebematerials durch direkten Energieeintrag geeignet. Die Wärmequelle ermöglicht ein Aktivieren des Klebematerials. Insbesondere wurde erkannt, dass der mehrlagige Materialaufbau kontinuierlich durch Flammkaschieren hergestellt werden kann. Die Vorrichtung ist im Wesentlichen eine Flammkaschier-Vorrichtung. Flammkaschier-Vorrichtungen sind seit Langem bekannt. Es ist eine wesentliche Voraussetzung, erkannt zu haben, dass eine an sich bekannte Flammkaschier-Vorrichtung derart modifiziert werden kann, dass sie zum kontinuierlichen Verbinden des steifen Trägermaterials mit einem anderen Material möglich ist.

Die Zuordnung der Wärmequelle zu einer Kalanderwalze ermöglicht eine kontrollierte und gezielte Erwärmung des Klebematerials. Der direkte Energieeintrag ist durch eine Orientierung der Wärmequelle quer zur Umfangsrichtung der Kalanderwalzen vorteilhaft. Die Wärmequelle erzeugt insbesondere eine linienartige Flamme, wobei die Linie im Wesentlichen parallel zur Drehachse der Kalanderwalze orientiert ist.

Ein oberflächliches Anschmelzen gemäß Anspruch 2 ermöglicht eine unmittelbare Aktivierung des Klebematerials zum anschließenden Verkleben mit dem Trägermaterial. Die Wärmequelle ist insbesondere dazu geeignet, eine direkte Flamme mit einer Temperatur von mindestens 1000°C bereitzustellen. Durch das zumindest oberflächliche Anschmelzen des Klebematerials wird dieses pastös.

Das Bereitstellen des Ausgangs- und des Endprodukts als Rollenmaterial ermöglich eine platzsparende Anordnung. Darüber hinaus ist eine quasi kontinuierliche Durchführung des Herstellverfahrens gewährleistet. Das Herstellverfahren muss nur dann unterbrochen werden, wenn ein Rollenwechsel für das Trägermaterial und/oder den mehrlagigen Materialaufbau erforderlich ist.

Ein Fördern des Trägermaterials entlang einer geradlinigen Förderrichtung gemäß Anspruch 4 reduziert mechanische Beanspruchungen des Trägermaterials und/oder des mehrlagigen Materialaufbaus vor, während und nach dem Verbinden des Verbundmaterials mit dem Trägermaterial.

Eine Ausführung des Verbundmaterials gemäß Anspruch 5 ermöglicht einen vielfältigen Einsatz des mehrlagigen Materialaufbaus, insbesondere im Dekorbereich. Das Verbundmaterial weist neben dem Klebematerial ein damit verbundenes Obermaterial auf. Bei dem Obermaterial handelt es sich insbesondere um textile Dekor-Oberware, die beispielsweise zu 100% aus Polyethersulfon (PES) bestehen kann. Alternativ kann die Oberware auch aus Polyvenylchlorid (PVC) bestehen und als PVC-Kunstleder ausgeführt sein.

Bei einem Trägermaterial gemäß Anspruch 6 ist das kontinuierliche Herstellen des mehrlagigen Materialaufbaus besonders wirtschaftlich. Das Trägermaterial müsste andernfalls diskontinuierlich mit einem Dekormaterial verklebt werden. Das Trägermaterial ist im Wesentlichen inelastisch. Das Trägermaterial ist keine Webware. Dar Trägermaterial ist keine Strickware. Das Trägermaterial ist keine Wirkware. Das Trägermaterial ist kein textiles Material. Die Biegesteifigkeit des Trägermaterials beträgt mindestens 80 N/mm², insbesondere mindestens 100 N/mm², insbesondere mindestens 120 N/mm², insbesondere mindestens 140 N/mm², insbesondere mindestens 160 N/mm² und insbesondere bis zu 180 N/mm².

Ein Kalanderwalzenpaar gemäß Anspruch 7 ermöglicht eine unkomplizierte Ausführung der Verbindungseinheit. Kalanderwalzen sind zum Verbinden bahnförmiger Materialien zu einem Materialverbund besonders gut geeignet und unkompliziert ausgeführt. Die Förderrichtung entlang der Verbindungseinheit wird durch den Kalanderwalzenspalt zwischen den Kalanderwalzen des Kalanderwalzenpaars vorgegeben. Vorteilhaft ist es, wenn der Kalanderwalzenspalt fluchtend zu der ersten Zuführrichtung und zu der Abführrichtung angeordnet ist. Insbesondere sind die erste Zuführrichtung, die Förderrichtung und die Abführrichtung zueinander parallel.

Eine Anordnung einer Kalanderwalze entlang der Zuführung des Verbundmaterials in die Verbindungseinheit ermöglicht eine geführte Zuführung des Verbundmaterials. Insbesondere ist eine platzsparende Anordnung der Wärmequelle an der Kalanderwalze möglich. Die Zuführung des Verbundmaterials kann effektiv und funktionsintegriert durchgeführt werden. Insbesondere wird das Verbundmaterial mit einem Umschlingungswinkel um die Kalanderwalze herum geführt, wobei der Umschlingungswinkel mindestens 120°, insbesondere mindestens 135°, insbesondere mindestens 150°, insbesondere mindestens 165° und insbesondere mindestens 180° beträgt.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:

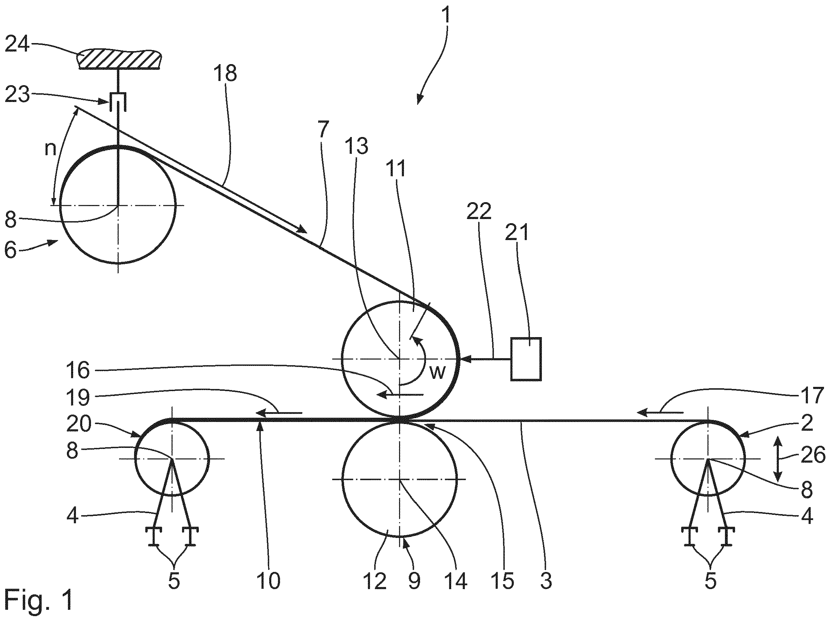

- Fig. 1: eine schematische Darstellung einer Vorrichtung zum kontinuierlichen Herstellen eines mehrlagigen Materialaufbaus gemäß der Erfindung.

Die in Fig. 1 als Ganzes mit 1 bezeichnete Vorrichtung umfasst eine Trägermaterial-Speichereinheit 2 in Form einer Trägermaterial-Speicherrolle, auf der Trägermaterial 3 als Rollenmaterial bevorratet und bahnförmig zur weiteren Verarbeitung zur Verfügung gestellt wird. Das Trägermaterial 3 ist glasfaserverstärkter Kunststoff, kurz GFK. Die Trägermaterial-Speichereinheit 2 weist ein Gestell 4 auf, das höhenverstellbar ausgeführt ist. Das Gestell 4 weist höhenverstellbare Füße 5 auf, um eine Höhenverstellung entlang einer Vertikalrichtung 26 nach oben oder nach unten zu ermöglichen. Die Trägermaterial-Speicherrolle ist drehbar um eine Drehachse 8 am Gestell 4 gelagert. Die Vorrichtung 1 weist ferner eine Verbundmaterial-Speichereinheit 6 auf, mittels der Verbundmaterial 7 als Rollenmaterial bevorratet und zur
weiteren Verarbeitung in der Vorrichtung 1 zur Verfügung gestellt wird. Die Verbundmaterial-Speichereinheit 6 ist als um eine Drehachse 8 drehbar gelagerte Verbundmaterial-Speicherrolle ausgeführt. Die Verbundmaterial-Speichereinheit 6 ist hängend in der Vorrichtung 1 integriert. Die Verbundmaterial-Speichereinheit 6 ist mittels einer höhenverstellbaren Aufhängung 23 an einem nicht näher dargestellten, ortsfesten Rahmen 24 der Vorrichtung 1 aufgehängt.

Das Verbundmaterial 7 ist insbesondere zweilagig ausgeführt und weist ein schaumförmiges Klebematerial, insbesondere PU- oder Polyolefin-Schaum, sowie eine Dekor-Oberware als Obermaterial auf, das mit dem Klebematerial verbunden ist. Das Obermaterial ist insbesondere PES oder PVC. Das Verbundmaterial 7 ist ein Schaum-Dekor-Verbundmaterial.

Die Vorrichtung 1 weist ferner eine Verbindungseinheit 9 auf, die zum kontinuierlichen Verbinden des Verbundmaterials 7 mit dem Trägermaterial 3 dient. Durch das Verbinden des Verbundmaterials 7 mit dem Trägermaterial 3 wird ein mehrlagiger Materialaufbau 10 geschaffen.

Die Verbindungseinheit 9 umfasst ein Kalanderwalzenpaar mit einer oberen Kalanderwalze 11 und einer unteren Kalanderwalze 12. Die obere Kalanderwalze 11 ist um eine obere Kalanderwalzen-Drehachse 13 gemäß Fig. 1 im Uhrzeigersinn und die untere Kalanderwalze 12 um eine untere Kalanderwalzen-Drehachse 14 gemäß Fig. 1 im Gegenuhrzeigersinn drehbar. Die Kalanderwalzen 11, 12 sind in entgegengesetzten Drehrichtungen drehbar. Ein zwischen den Kalanderwalzen 11, 12 gebildeter Kalanderwalzenspalt 15 dient zum Verpressen der zugeführten Materialien, also des bahnförmigen Trägermaterials 3 und des bahnförmigen Verbundmaterials 7. Der Kalanderwalzenspalt 15 weist eine Spaltbreite auf, die entlang einer imaginären Verbindungslinie der Kalanderwalzen-Drehachsen 13, 14 orientiert ist. Die Spaltbreite des Kalanderwalzenspalts 15 ist geringfügig kleiner als die Summe der Ausgangsdicken des Trägermaterials 3 und des Verbundmaterials 7. Der Kalanderwalzenspalt 15 gibt eine Förderrichtung 16 vor. Entlang der Förderrichtung 16 werden das Trägermaterial 3 und das Verbundmaterial 7 durch die Verbindungseinheit 9 gefördert. Die Förderrichtung 16 ist senkrecht zu der imaginären Verbindungslinie der Kalanderwalzen-Drehachsen 13, 14 definiert. Die Förderrichtung 16 ist geradlinig orientiert. Gemäß dem gezeigten Ausführungsbeispiel ist die Förderrichtung 16 horizontal orientiert. Die Förderrichtung 16 kann auch gegenüber der Horizontalen geneigt angeordnet sein.

Mittels einer ersten Zuführeinheit wird das Trägermaterial 3 der Verbindungseinheit 9 zugeführt. Die erste Zuführeinheit kann verschiedene Zuführ- und/oder Förderelemente zum, insbesondere angetriebenen, Fördern des Trägermaterials 3 zu der Verbindungseinheit 9 umfassen. Gemäß dem gezeigten Ausführungsbeispiel erfolgt die Zuführung des Trägermaterials 3 von der Trägermaterial-Speichereinheit 2 zu der Verbindungseinheit 9 ohne zusätzliche Komponenten. Die erste Zuführeinheit umfasst im Wesentlichen die Trägermaterial-Speichereinheit 2. Das Zuführen des Trägermaterials 3 erfolgt entlang einer ersten Zuführrichtung 17, die insbesondere durch die relative Positionierung der Trägermaterial-Speichereinheit 2 gegenüber der Verbindungseinheit 9 vorgegeben ist. Durch eine Höhenverstellung der Trägermaterial-Speichereinheit 2 kann die Neigung der ersten Zuführrichtung 17 veränderlich festgelegt werden. Gemäß dem gezeigten Ausführungsbeispiel ist die erste Zuführrichtung 17 horizontal orientiert.

Das Verbundmaterial 7 wird mittels einer zweiten Zuführeinheit der Verbindungseinheit 9 zugeführt. Entsprechend der ersten Zuführeinheit ist die zweite Zuführeinheit ohne zusätzliche Komponenten ausgeführt. Die zweite Zuführeinheit umfasst im Wesentlichen die Verbundmaterial-Speichereinheit 6. Von der zweiten Zuführeinheit wird eine zweite Zuführrichtung 18 festgelegt, die gemäß dem gezeigten Ausführungsbeispiel gegenüber der Horizontalen um einen Neigungswinkel n von etwa 15° geneigt angeordnet ist. Der Neigungswinkel n kann mittels der höhenverstellbaren Aufhängung 23 veränderlich eingestellt werden. Das Verbundmaterial 7 ist entlang der zweiten Zuführrichtung 18 der oberen Kalanderwalze 11 des Kalanderwalzenpaares zugeführt, um die obere Kalanderwalze 11 mit einem Umschlingungswinkel w herumgeführt. Gemäß dem gezeigten Ausführungsbeispiel beträgt der Umschlingungswinkel w etwa 180°. Das Verbundmaterial 7 ist also um den halben Zylinder-Umfang der Kalanderwalze 11 geführt.

Der mehrlagige Materialaufbau 10 wird aus der Verbindungseinheit 9 entlang einer Abführrichtung 19 zu einer Materialaufbau-Speichereinheit 20 abgeführt. Die Materialaufbau-Speichereinheit 20 dient zum Speichern und Aufnehmen des mehrlagigen Materialaufbaus 10 als bahnförmiges Material in Form eines Rollenmaterials. Die Materialaufbau-Speichereinheit 20 ist im Wesentlichen identisch ausgeführt wie die Trägermaterial-Speichereinheit 2 mit einer um die Drehachse 8 am Gestell 4 drehbar gelagerten Speicherrolle und höhenverstellbaren Füßen 5 am Gestell 4. Über die höhenverstellbaren Füße 5 kann ein Neigungswinkel der Abführrichtung 19 veränderlich festgelegt werden. Gemäß dem gezeigten Ausführungsbeispiel ist die Abführrichtung 19 horizontal orientiert.

Die erste Zuführrichtung 17, die Förderrichtung 16 und die Abführrichtung 19 sind parallel und insbesondere jeweils horizontal orientiert.

An der oberen Kalanderwalze 11 ist im Bereich des Umschlingungswinkels w, also in dem Bereich, in dem das Verbundmaterial 7 an der Kalanderwalze 11 anliegt und entlang der Kalanderwalze 11 der Verbindungseinheit 9 geführt wird, eine Wärmequelle 21 in Form eines Gasbrenners angeordnet. Die Wärmequelle 21 stellt eine direkte Gasflamme zur Erwärmung des Verbundmaterials 7 zur Verfügung. Die Gasflamme ist insbesondere linienförmig ausgeführt und erstreckt sich entlang der oberen Kalanderwalzen-Drehachse 13, also senkrecht zur Zeichenebene gemäß Fig. 1. Die Gasflamme, die durch den Pfeil 22 in Fig. 1 symbolisiert ist, kann im Wesentlichen senkrecht zur einer Umfangsrichtung der oberen Kalanderwalze 11 orientiert sein. Die Flamme 22 kann auch geneigt gegenüber der Walzenoberfläche orientiert sein.

Nachfolgend wird ein Verfahren zum kontinuierlichen Herstellen des mehrlagigen Materialaufbaus 10 näher erläutert. Das bahnförmige Trägermaterial 3 wird von der Trägermaterial-Speichereinheit 2 entlang der ersten Zuführrichtung 17 der Verbindungseinheit 9 zugeführt. Das bahnförmige Verbundmaterial 7 wird von der Verbundmaterial-Speichereinheit 6 entlang der zweiten Zuführrichtung 18 der Verbindungseinheit 9 zugeführt.

Das Verbundmaterial 7 ist derart orientiert, dass das Klebematerial an einer der oberen Kalanderwalze 11 abgewandten Außenseite angeordnet ist. Das Verbundmaterial 7 liegt mit dem Obermaterial an der oberen Kalanderwalze 11 an und wird um diese herumgeführt. Durch das direkte Erhitzen des Verbundmaterials 7 mittels des Gasbrenners 21 wird das außenliegende Klebematerial von der Flamme 22 direkt beaufschlagt. Das Klebematerial wird durch die Flamme 22, die eine Temperatur von bis zu 1000°C oder mehr aufweisen kann, oberflächlich angeschmolzen und pastös. Das angeschmolzene Klebematerial ist an der Oberware gehalten und wird in diesem Zustand in den Kalanderwalzenspalt 15 zusammen mit dem Trägermaterial 3 zugeführt.

Im Kalanderwalzenspalt 15 werden das erwärmte Verbundmaterial 7 und das Trägermaterial 3 miteinander verpresst und dadurch verbunden. Das Trägermaterial 3 und das Verbundmaterial 7 werden entlang der Förderrichtung 16 durch die Verbindungseinheit 9 geführt. Die so verbundenen Materialien 3, 7 bilden den bahnförmigen, mehrlagigen Materialaufbau 10, der entlang der Abführrichtung 19 abgeführt und als Rollenmaterial in der Materialaufbau-Speichereinheit 20 aufgenommen und dort gespeichert werden kann. Das Herstellen des mehrlagigen Materialaufbaus 10 erfolgt kontinuierlich, insbesondere solange, bis die Trägermaterial-Speichereinheit 2 oder die Verbundmaterial-Speichereinheit 6 entleert sind.

Wesentlich ist, dass die Förderung des Trägermaterials 3 insbesondere durch den gesamten Herstellprozess entlang der Vorrichtung 1 geradlinig erfolgt. Geradlinig bedeutet, dass im Wesentlichen keine Winkelabweichungen zwischen der ersten Zuführrichtung 17 und der Förderrichtung 16 sowie zwischen der Förderrichtung 16 und der Abführrichtung 19 vorliegen.

Das Herstellen des mehrlagigen Materialaufbaus, bei dem das Trägermaterial 3 eine hohe Biegesteifigkeit aufweist, ist wirtschaftlich. Es wurde erkannt, dass das an sich bekannte Verfahren des Flammkaschierens geeignet ist, ein derart biegesteifes Trägermaterial 3 wie GFK als bahnförmiges Halbzeug in einem kontinuierlichen Prozess zu verarbeiten.

## Patentansprüche

1. Verfahren zum kontinuierlichen Herstellen eines mehrlagigen Materialaufbaus (10) umfassend die Verfahrensschritte
- Zuführen von faserverstärktem Kunststoffmaterial als Trägermaterial (3) mittels einer ersten Zuführeinheit (2), wobei die Biegesteifigkeit des Trägermaterials (3) mindestens 50 N/mm² beträgt,
- Zuführen von Verbundmaterial (7) mittels einer zweiten Zuführeinheit (6), wobei das Verbundmaterial (7) zumindest bereichsweise ein schaumförmiges Klebematerial aufweist,
- Erwärmen des Klebematerials mittels einer Wärmequelle (21) in Form einer offenen Brennerflamme,
- kontinuierliches Verbinden des erwärmten Verbundmaterials (7) mit dem Trägermaterial (3) zu dem mehrlagigen Materialaufbau (10) mittels einer Verbindungseinheit (9).

2. Verfahren gemäß Anspruch 1, **gekennzeichnet durch** zumindest oberflächliches Anschmelzen des Klebematerials durch das Erwärmen mit der Wärmequelle (21).

3. Verfahren gemäß Anspruch 1 oder 2, **gekennzeichnet durch** ein Bereitstellen des Trägermaterials (3) als Rollenmaterial und/oder Speichern des mehrlagigen Materialaufbaus (10) als Rollenmaterial.

4. Verfahren gemäß einem der Ansprüche 1 bis 3, **gekennzeichnet durch** Fördern des Trägermaterials (3) und des Verbundmaterials (7) durch die Verbindungseinheit (9) entlang einer geradlinigen Förderrichtung (16).

5. Verfahren gemäß einem der Ansprüche 1 bis 4, **dadurch gekennzeichnet, dass** das Verbundmaterial (7) ein mit dem Klebematerial verbundenes Obermaterial aufweist, das insbesondere Polyethersulfon (PES) und/oder Polyvinylchlorid (PVC) enthält.

6. Verfahren gemäß einem der Ansprüche 1 bis 5, **dadurch gekennzeichnet, dass** die Biegesteifigkeit des Trägermaterials (3) mindestens 80 N/mm², insbesondere mindestens 100 N/mm², insbesondere mindestens 120 N/mm², insbesondere mindestens 140 N/mm², insbesondere mindestens 160 N/mm² und insbesondere bis zu 180 N/mm² beträgt.

7. Verfahren gemäß einem der Ansprüche 1 bis 6, **dadurch gekennzeichnet, dass** die Verbindungseinheit (9) ein Kalanderwalzenpaar (11, 12) aufweist, wobei ein von den Kalanderwalzen (11, 12) gebildeter Kalanderwalzenspalt (15) im Wesentlichen fluchtend zu der ersten Zuführrichtung (17) und zu der Abführrichtung (19) angeordnet ist, wobei insbesondere das Verbundmaterial (7) entlang einer Kalanderwalze (11) der Verbindungseinheit (9) zugeführt wird, wobei ein Umschlingungwinkel (w) insbesondere mindestens 120°, insbesondere mindestens 135°, insbesondere mindestens 150°, insbesondere mindestens 165° und insbesondere mindestens 180° beträgt.

## Claims

1. Method for continuously producing a multi-layer material structure (10), comprising the method steps of
- feeding a fibre-reinforced plastic material serving as a carrier material (3) by means of a first feed unit (2), the bending stiffness of the carrier material (3) being at least 50 N/mm²,
- feeding a composite material (7) by means of a second feed unit (6), the composite material (7) having a foam adhesive material at least in sections,
- heating the adhesive material using a heat source (21) configured as an open burner flame,
- continuously joining the heated composite material (7) to the carrier material (3) to form the multi-layer material structure (10) by means of a joining unit (9).

2. Method as claimed in claim 1, **characterised by** at least superficially melting the adhesive material by the heating using the heat source (21).

3. Method as claimed in claim 1 or 2, **characterised by** providing the carrier material (3) as a roll material and/or storing the multi-layer material structure (10) as a roll material.

4. Method as claimed in any one of claims 1 to 3, **characterised by** conveying the carrier material (3) and the composite material (7) through the joining unit (9) along a linear conveying direction (16).

5. Method as claimed in any one of claims 1 to 4, **characterised in that** the composite material (7) has an upper material joined to the adhesive material, said upper material containing in particular polyether sulphone (PES) and/or polyvinylchloride (PVC).

6. Method as claimed in any one of claims 1 to 5, **characterised in that** the bending stiffness of the carrier material (3) is at least 80 N/mm², in particular at least 100 N/mm², in particular at least 120 N/mm², in particular at least 140 N/mm², in particular at least 160 N/mm², and in particular up to 180 N/mm².

7. Method as claimed in any one of claims 1 to 6, **characterised in that** the joining unit (9) has a pair of calender rollers (11, 12), a calender roller gap (15), which is formed by the pair of calender rollers (11, 12), being arranged essentially in line with the first feed direction (17) and with the discharge direction (19), the composite material (7) in particular being fed to the joining unit (9) along a calender roller (11) of the joining unit, an angle of contact (w) being in particular at least 120°, in particular at least 135°, in particular at least 150°, in particular at least 165°, and in particular at least 180°.

## Revendications

1. Procédé de fabrication en continu d'une structure de matériau (10) à plusieurs couches, comprenant les étapes de procédé suivantes :
- acheminement de matériau plastique renforcé de fibres en tant que matériau support (3) au moyen d'une première unité d'acheminement (2), la rigidité en flexion du matériau support (3) étant au moins égale à 50 N/mm²,
- acheminement de matériau composite (7) au moyen d'une deuxième unité d'acheminement (6), le matériau composite (7) comportant au moins par tronçons un matériau adhésif en forme de mousse,
- chauffage du matériau adhésif au moyen d'une source de chaleur (21) sous la forme d'une flamme de brûleur ouverte,
- raccordement continu, au moyen d'une unité de raccordement (9), du matériau composite (7) chauffé au matériau support (3) pour donner la structure de matériau (10) à plusieurs couches.

2. Procédé selon la revendication 1, **caractérisé par** une fusion au moins superficielle du matériau adhésif par le chauffage avec la source de chaleur (21).

3. Procédé selon la revendication 1 ou 2, **caractérisé par** une fourniture du matériau support (3) en tant que matériau en rouleau et/ou par un stockage de la structure de matériau (10) à plusieurs couches en tant que matériau en rouleau.

4. Procédé selon l'une des revendications 1 à 3, **caractérisé par** le transport du matériau support (3) et du matériau composite (7) à travers l'unité de raccordement (9) le long d'une direction de transport (16) rectiligne.

5. Procédé selon l'une des revendications 1 à 4, **caractérisé en ce que** le matériau composite (7) comporte un matériau supérieur raccordé au matériau adhésif qui contient en particulier du polyéthersulfone (PES) et/ou du polychlorure de vinyle (PVC).

6. Procédé selon l'une des revendications 1 à 5, **caractérisé en ce que** la rigidité en flexion du matériau support (3) est au moins égale à 80 N/mm², en particulier au moins égale à 100 N/mm², en particulier au moins égale à 120 N/mm², en particulier au moins égale à 140 N/mm², en particulier au moins égale à 160 N/mm², et atteint en particulier 180 N/mm².

7. Procédé selon l'une des revendications 1 à 6, **caractérisé en ce que** l'unité de raccordement (9) comporte au moins une paire de cylindres de calandre (11, 12), un interstice de cylindres de calandre (15) formé par les cylindres de calandre (11, 12) étant disposé essentiellement en affleurement avec la première direction d'acheminement (17) et avec la direction d'évacuation (19), le matériau composite (7) en particulier étant acheminé le long d'un cylindre de calandre (11) de l'unité de raccordement (9), un angle d'enroulement (w) étant en particulier au moins égal à 120°, en particulier au moins égal à 135°, en particulier au moins égal à 150°, en particulier au moins égal à 165° et en particulier au moins au moins 180°.
